**Europäisches Patentamt**

**European Patent Office**

**Office européen des brevets**

(19)

(11) Veröffentlichungsnummer: **0 259 562 B1**

(12) **EUROPÄISCHE PATENTSCHRIFT**

(45) Veröffentlichungstag der Patentschrift: **27.12.91**

(51) Int. Cl.⁵: **H04N 7/133**, H04N 7/137

(21) Anmeldenummer: **87109846.3**

(22) Anmeldetag: **08.07.87**

(54) Verfahren zur bewegungskompensierten Bild-zu-Bild-Prädiktionscodierung.

(30) Priorität: **29.08.86 DE 3629472**

(43) Veröffentlichungstag der Anmeldung:
**16.03.88 Patentblatt 88/11**

(45) Bekanntmachung des Hinweises auf die
Patenterteilung:
**27.12.91 Patentblatt 91/52**

(84) Benannte Vertragsstaaten:
**AT BE CH DE ES FR GB IT LI LU NL SE**

(56) Entgegenhaltungen:
**DE-A- 3 328 341
US-A- 4 460 923
US-A- 4 575 756
US-A- 4 591 908**

**CONFERENCE RECORD ON THE IEEE INTER-
NATIONAL CONFERENCE ON COMMUNICA-
TIONS, Philadelphia, 13.-17. Juni 1982, Band
1, Seiten 2G.7.1-2G.7.5, IEEE, New York, US; F.
MAY et al.: "Picture coding with motion analysis for low rate transmission"**

(73) Patentinhaber: **Licentia Patent-
Verwaltungs-GmbH
Theodor-Stern-Kai 1
W-6000 Frankfurt/Main 70(DE)**

(72) Erfinder: **Kummerfeldt, Georg, Dipl.-Ing.
Bogenholzstrasse 12
W-7910 Neu-Ulm(DE)**
Erfinder: **May, Franz, Dr. Dipl.-Ing.
Brucknerweg 17
W-7900 Ulm(DE)**
Erfinder: **Wolf, Winfrid, Dipl.-Ing.
Herrenkellergasse 5
W-7900 Ulm(DE)**

(74) Vertreter: **Schulze, Harald Rudolf, Dipl.-Ing. et
al
Licentia Patent-Verwaltungs-GmbH Theodor-
Stern-Kai 1
W-6000 Frankfurt/Main 70(DE)**

PROCEEDINGS OF THE SOCIETY OF PHOTO-OPTICAL INSTRUMENTATION ENGINEERS (SPIE), Band 594, Dezember 1985, Cannes, Seiten 119-128, Image Coding, (SPIE CONFERENCE B594); G. KUMMERFELDT et al.: "Coding television signals at 320 and 64 kbit/s"

IEEE TRANSACTIONS ON COMMUNICATIONS, Band COM-29, Nr. 12, Dezember 1981, Seiten 1799-1808, IEEE, New York, US; J.R. JAIN et al.: "Displacement measurement and its application in interframe image coding"

## Beschreibung

Die Prädiktionscodierung nutzt das Vorwissen, das beim Empfänger bereits vorhanden ist, aus, um das aktuelle Bild mit möglichst wenig Information zu beschreiben. Sie wird erheblich verbessert, wenn die Bild-zu-Bild-Änderungen infolge Bewegungen in der Szene räumlich und zeitlich erfaßt und bei der Berechnung des prädizierten Bildes miteinbezogen werden (Prädiktionscodierung mit Bewegungskompensation).

Zur Übertragung von Bildtelefonszenen bei Übertragungsraten zwischen 64 kbit/s und 384 kbit/s haben sich zwei Methoden der Bewegungskompensation besonders bewährt. Die eine, z.B. aus der EP 0 123 616 bekannte Methode zur Bewegungskompensation ist die blockweise Bewegungskompensation. Sie arbeitet schematisch das ganze aktuelle, zu prädizierende Bild ab (ikonische Bildverarbeitung), indem sie es in ein regelmäßiges (n x n)-Blockraster unterteilt und jedem Block diejenige Bild-zu-Bild-Verschiebung zuordnet, für welche ein Abstandsmaß (Ähnlichkeitsmaß) zwischen dem Grauwertgebirge des betrachteten Blockes und dem Grauwertgebirge eines entsprechend verschobenen Blockes im vorhergehenden Bild ein Minimum (Maximum) annimmt. Zur Prädiktion wird ein Block aus dem letzten rekonstruierten (beim Empfänger bereits vorhandenen) Bild genommen, welcher um die ermittelte Verschiebung gegenüber dem zu prädizierenden Block versetzt ist.

Die andere Methode ist die objektbezogene Bewegungskompensation. Sie ist z.B. bekannt aus der DE-OS 33 28 341. Sie arbeitet prinzipiell nicht schematisch, sondern bildinhaltsbezogen (semantische Bildverarbeitung), indem versucht wird, bewegte von unbewegten Teilen der Bildfolge zu separieren, sie anhand ihres Bewegungsverhaltens zu charakterisieren, auf diese Weise dann zu geschlossenen, gegeneinander abgegrenzten Objekten mit beschreibbarem Bewegungsverhalten zu gelangen, und schließlich mit Hilfe der gewonnenen Beschreibung des Bewegungsverhaltens ein bewegungskompensiertes prädiziertes Bild des aktuellen Bildes zu erstellen. Diese Methode wird auch als "Objekt-Matching" bezeichnet. Zum Stand dieser Technik wird u.a. auf den Aufsatz "Coding Television Signals at 320 and 64 kbit/s (2nd Int. Tech. Symp. on Optical and Electro-Optical Appl. Science and Engineering, SPIE Conf. B594 Image Coding, Cannes, France, Dec. 1985) verwiesen.

Codecs zur extremen Reduktion der Übertragungsrate, die z.B. für die oben genannten Bitraten erforderlich sind, müssen auf ein eingeschränktes Szenenmaterial, das sie zu verarbeiten haben, adaptiert sein. Sie sind daher weder universell einsetzbar noch anhand beliebiger Szenen beurteilbar. Charakteristisch für Bildtelefon- und Videokonferenzszenen sind Variationen in der Gesetzmäßigkeit der Bild-zu-Bild-Änderungen zwischen großflächigen Veränderungen wie z.B. bei Zoom durch Brennweitenvergrößerung des Kameraobjektivs, und überwiegend regellosen Veränderungen, wie z.B. bei einer stark gestikulierenden bewegten Person mit heftigem Mienenspiel, welche außerdem eine stark texturierte Kleidung mit reichlichem Faltenwurf trägt.

Eine vereinfachte Ausführung der vorbeschriebenen objektbezogenen Bewegungskompensation ist in der US-A-4 575 756 beschrieben. Dabei wird für ein als zusammenhängend erkanntes Gebiet mit mehreren Blöcken aus den zuvor bestimmten Bewegungsvektoren der einzelnen Blöcke ein für alle Blöcke dieses Gebiets repräsentativer Verschiebungsvektor abgeleitet, z. B. durch Mittelwertbildung oder Häufigkeitsbetrachtung.

Jedes der beiden genannten Verfahren zur Bewegungskompensation offenbart bei der Codierung von solchen extremen Szenenänderungen seine Schwächen vollständig. Dies soll anhand dreier Gütekriterien erläutert werden.

Ein erstes Gütemaß für die Bewegungskompensation ist das Verhältnis der jeweils über alle Bildpunkte gemittelten quadratischen Abweichung entweder des bewegungskompensierten prädizierten Bildes oder des letzten rekonstruierten Bildes vom aktuellen Originalbild.

Die objektbezogene Bewegungskompensation erzielt die höchsten Gewinne bei der Prädiktion von Bild-zu-Bild-Änderungen, welche durch Bewegungen von großen Objekten im Szenenraum hervorgerufen werden, die überwiegend den Gesetzen der Translation im Szenenraum gehorchen: Bewegungen der gesamten abgebildeten Partie einer sonst ruhigen Person seitlich, nach vorn oder hinten. Bei Schwenk oder Zoom der Kamera ist die objektbezogene Bewegungskompensation von Vorteil, da sämtliche bereits im vorhergehenden Bild vorhandenen Bildpunkte nach einem einheitlichen, einfachen Gesetz im aktuellen Bild verschoben wieder erscheinen.

Die blockweise Bewegunskompensation ist dagegen bei regellosen Bildveränderungen vorteilhaft.

Das zweite entscheidende Gütemaß für die Bewegungskompensation ist die erforderliche Datenrate zur Übertragung der Steuerdaten für den bewegungskompensierenden Prädiktor und zur Übertragung des sog. Prädiktionsfehlersignals zur Korrektur der im prädizierten Bild verbliebenen Fehler.

Während bei Objekt-Matching für jedes geschlossene bewegte Objekt ein Satz von Steuerdaten genannt charakteristischer Bewegungsvektor, mit der Genauigkeit von mindestens 1/10 Bildpunktabstand übertragen werden kann, um eine optimale bewegungskompensierte Schätzbildberechnung zu ermöglichen, ist dies bei Blockmatching unmöglich, denn Block-Matching erfordert die Übertragung eines Verschiebungsvektors für jeden von Bild zu Bild veränderten Block. Damit würde der Steuerdatenstrom zu Lasten des übertragbaren Prädiktionsfehlersignals unzulässig ansteigen. Folglich sind nur Blockverschiebungen um ganzzahlige Vielfache des Bildpunktabstands in jeder Koordinatenrichtung realisierbar, mit der Konsequenz geringeren Gewinns durch Bewegungskompenation.

Ein drittes Gütemaß, das im Gegensatz zu den beiden vorstehend genanten objektiven Gütemaßen ein subjektives Gütekriterium ist, sind die im rekonstruierten Bild verbleibenden, infolge der begrenzten Datenrate nicht korrigierten Fehler. Unter diesen verbleibenden Fehlern fallen als störend sichtbar diejenigen auf, welche durch Fehlanpassung der starren Blockstruktur an die natürlichen Grenzen der verschiedenen bewegten Bildbereiche künstlich in die rekonstruierten Bilder eingebracht und daher auch als Artefakte bezeichnet werden.

Bei Objekt-Matching treten diese Artefakte nur an den Grenzen der geschlossenen Objekte auf, während sie bei Block-Matching prinzipiell überall dort auftreten können, wo unterschiedlich bewegungskompensierte Blöcke aneinanderstoßen.

Der Erfindung liegt die Aufgabe zugrunde, den Stand der Technik zu verbessern. Insbesondere soll ein Verfahren der im Oberbegriff des Patentanspruchs 1 genannten Art angegeben werden, mit dem die Datenrate zur Übertragung von Bildsignalen, insbesondere für ein Bildtelefon (Bildfernsehtelefon), weiter eingeschränkt und/oder die übertragene Bildqualität verbessert werden kann. Die Aufgabe wird durch die im Patentanspruch 1 genannten Verfahrensschritte gelöst.

Das erfindungsgemäße Verfahren vermeidet die Schwächen der blockweisen und objektbezogenen Bewegungskompensation, die auftreten, wenn jeweils nur eine Kompensation ausschließlich angewendet wird. Es nutzt aus, daß sich die beiden Verfahren in vorteilhafter Weise ergänzen und bestimmt den günstigsten Kompromiß zwischen ihnen. Als Resultat erhält man eine Verbesserung des mittleren Gewinns durch Bewegungskompensation gegenüber reinem Objekt-Matching, eine Verringerung der mittleren Steuerdatenrate zur Übertragung der Bewegungsvektoren und eine Reduzierung der Artefakte gegenüber reinem Block-Matching. Bei höherem Gewinn durch Bewegungskompensation, bei weniger Datenrate zur Übertragung von Bewegungsvektoren und bei weniger Artefakten im prädizierten Bild verbleibt im Mittel ein größerer Anteil der zugelassenen Datenrate für die Übertragung des Prädiktionsfehlersignals, mit der Konsequenz einer gesteigerten objektiven und subjektiven Qualität des empfangenen Bildes.

Vorteilhafte Weiterbildungen aus Ausgestaltungen der Erfindung sind in den Unteransprüchen angegeben. Sie dienen jeweils zur weiteren Verbesserung des übertragenen Bildes bei möglichst geringer Datenübertragungsrate.

Die Erfindung wird nun anhand von Zeichnungen und eines Ausführungsbeispiels näher erläutert. Es zeigen im einzelnen:

FIG. 1:    Blockschaltbild eines Codierers zur Durchführung einer bewegungskompensierten Bild-zu-Bild-Prädiktion;

FIG. 2:    Bildblöcke und Block-Komplexe;

FIG. 3:    Blockschaltbild eines Codierers zur Durchführung des erfindungsgemäßen Verfahrens.

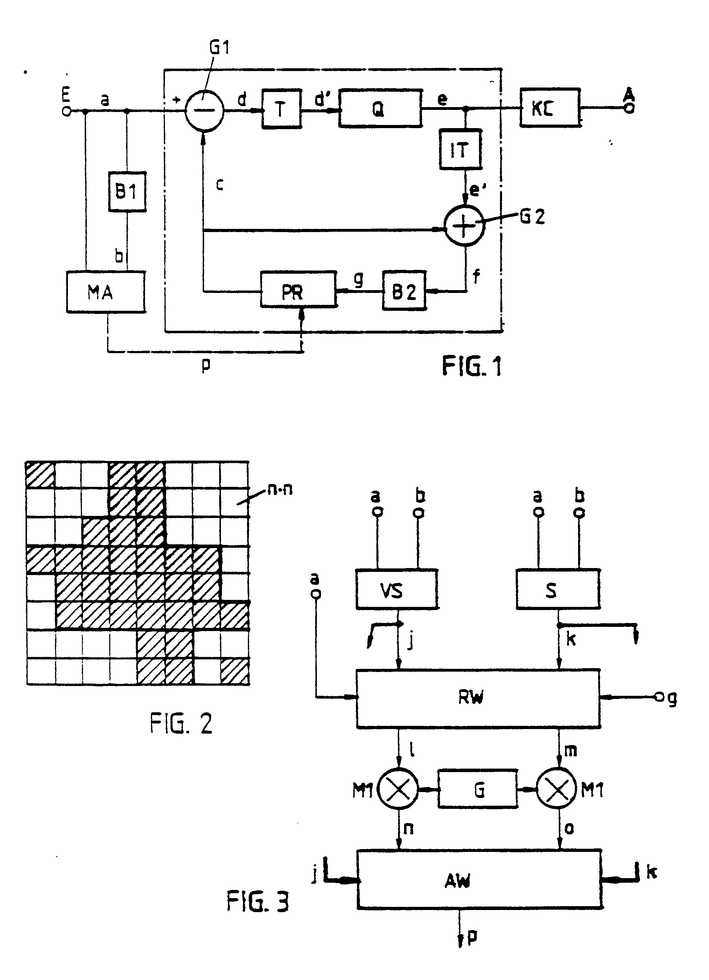

FIG. 1 zeigt das Blockschaltbild eines DPCM (Differential-Puls-Code-Modulation)-Coders mit Bewegungskompensation. Innerhalb des strichliert gezeichneten Bereiches befindet sich die DPCM-Schleife.

Von den am Eingang E eintreffenden Videosignalen a des Originalbildes werden die Videosignale c des vom Prädiktor PR vorausgesagten Schätzbildes in dem Subtrahierglied G1 subtrahiert. Die Prädiktionsfehler d als Ergebnis der Subtraktion werden über einen Quantisierer Q als quantisierte Videosignale e dem Kanalcodierer KC und anschließend dem Ausgang A zugeführt. Ferner werden die Signale c des Schätzbildes und die quantisierten Videosignale e addiert und über einen Bildspeicher B2 als um einen Bildabstand verzögerte Videosignale g wieder dem Prädiktor PR zugeführt und zwar als Schätzbild für das nun vorliegende aktuelle Bild.

Die DPCM-Schleife enthält in der Regel noch eine für Bildsignale besonders geeignete Transformationseinrichtung T zur Datenreduktion, die durch die zweite Transformationseinrichtung IT für die Signale zur Schätzbildkorrektur rückläufig gemacht wird (inverse Transformation). Als Transformationscodierung hat sich z.B. die Cos-Transformation besonders bewährt.

Zusätzlich zu dieser an sich bekannten DPCM-Schleife ist eine Einrichtung MA zur Ermittlung von Bildveränderungen (Bewegungsanalysator) aufeinanderfolgender Bilder vorgesehen. Sie erhält hierzu die Signale a des Originalbildes und über einen Bildspeicher B1 die Signale b des vorhergehenden Bildes. Die Bildspeicher B1 und B2 verzögern also jeweils ein Bild um die Dauer eines Bildabstandes.

Die Erweiterung der nur für den Coder gezeigten Struktur gegenüber der üblichen Bild-zu-Bild-Prädiktion besteht in der Steuerung des Prädiktors PR durch einen im Bewegungsanalysator MA vorgesehenen Segmenter und einen Verschiebungsschätzer. Der Segmenter liefert die Information, welche Blöcke von Bildpunkten der Prädiktor zu prädizieren hat und der Verschiebungsschätzer die Verschiebungs- oder Bewegungsinformation zur bewegungskompensierten Prädiktion. Aus dem Vergleich des vorhergehenden Bildes (b) und des aktuellen Originalbildes (a) werden Segmentation- und Verschiebungs- bzw. Bewegungsinformation gewonnen.

FIG. 2 zeigt im Schema das Resultat eines Segmenters, der im blockgerasterten Bild erstens infolge Bewegung in der Szene geänderte Blöcke detektiert (schraffiert eingezeichnet) und zweitens aneinanderliegende geänderte Blöcke zu Komplexen zusammenfaßt (dick ausgezogene Umrandung). Solche Komplexe können geschlossene, einheitlich gesetzmäßig bewegte Objekte repräsentieren, können aber auch durch eine Vielzahl unterschiedlich bewegter, nahe beieinanderliegender Bildbereiche entstehen.

Das nachfolgend erläuterte Auswahlverfahren wird im ersten Fall objektbezogene Bewegungskompensation, im andern Fall blockweise Bewegungskompensation wählen. Im allgemeinen treten beide Extreme von Bewegungsarten nicht so häufig auf, die Regel sind Mischformen. Das Auswahlverfahren ermittelt einerseits die jeweils günstigste Kombination eines Anteils von einzelnen und unabhängig voneinander verschobenen Blöcken und andererseits eines Anteils von Blöcken, deren Bildpunkte nach einem gemeinsamen Bewegungsgesetz des in der Szene bewegten Objektes verschoben werden.

Erfindungsgemäß wird die günstigste Kombination der beiden an sich bekannten Verfahren der Bewegungskompensation - blockweise und objektbezogene Bewegungskompensation - dadurch erreicht, daß für alle, infolge Bewegung in der Szene, von Bild zu Bild verschobenen Blöcke erste ihre Verschiebung ermittelt, dann für zusammenhängende Komplexe verschobener Blöcke ein gemeinsames, die Bewegung eines geschlossenen Objektes in der Szene repräsentierendes Bewegungsgesetz abgeleitet, und drittens wieder Block für Block geprüft wird, ob eine Einzelblockverschiebung oder eine dem Objektbewegungsgesetz gemäße Verschiebung aller Bildpunkte des untersuchten Blokes die geringere Abweichung des prädizierten Bildes vom aktuellen zu übertragenden originalen Bild ergibt. Die Abweichung wird durch ein geeignetes Abstandsmaß erfaßt. Bei annähernd gleicher Güte der Prädiktion wird der objektbezogenen Bewegungskompensation eindeutig der Vorzug gegeben, da sie in der Summe hinsichtlich des Steuerdatenaufwandes und hinsichtlich der Artefakte günstiger ist. Die Fehler im prädizierten Bild können besser korrigiert werden, da mehr Datenrate für das Prädiktionsfehlersignal zur Verfügung steht.

FIG. 3 zeigt ein Blockdiagramm eines in Fig. 1 dargestellten Bewegungsanalysators zur Durchführung des Auswahlverfahrens für blockweise und objektbezogene Bewegungskompensation. Der Verschiebungsschätzer ist mit VS und der Segmenter mit S bezeichnet. Die Daten j der Verschiebungsvektoren je Block und je Komplex und die Daten k der Komplexe geänderter Blöcke werden einem Rechenwerk RW zugeführt.

Aus den gemessenen Verschiebungen der Einzelblöcke und/oder aus im gesamten Komplex ermittelten Verschiebungsvektoren besonders hervorgehobener Punkte im Grauwertgebirge, welche sich im vorausgehenden Bild leicht und eindeutig wiederfinden lassen, wird ein Bewegungsgesetz abgeleitet, nach welchem sich alle Bildpunkte des Komplexes bewegungskompensiert prädizieren lassen. Nun wird blockweise der Komplex dahingehend untersucht, ob die Prädiktion mit blockweiser oder mit objektbezogener Bewegungskompensation besser ist. Dazu muß jeder Block des prädizierten Bildes sowohl mit Hilfe der blockweisen Bewegungskompensation als auch mit Hilfe der objektbezogenen Bewegungskompensation berechnet werden.

Ein Block des prädizierten Bildes wird mit Hilfe blockweiser Bewegungskompensation dadurch in einfacher Weise gewonnen, daß die Komponenten des für den Block ermittelten Verschiebungsvektors auf ganzzahlige Vielfache des Bildpunktabstandes gerundet werden und daß der um diese Verschiebung versetzt gelegene Block im letzten rekonstruierten Bild als Block des prädizierten Bildes eingesetzt wird.

Bei objektbezogener Bewegungskompensation werden alle Bildpunkte eines Blockes des prädizierten Bildes dadurch gebildet, daß mit einem Verschiebungsvektor, berechnet gemäß dem für den gesamten Komplex abgeleiteten Bewegungsgesetz auf mindestens 1/10 Bildpunkte genau, von den Koordinaten des betrachteten Bildpunktes aus ins letzte rekonstruierte Bild gegriffen, dort aus der 2x2-Bildpunktumgebung ein Grauwert interpoliert und für den betrachteten Bildpunkt des prädizierten Bildes eingesetzt wird.

Schließlich wird für jede der beiden berechneten Versionen eines Blockes des prädizierten Bildes ein Abstandsmaß (Signale 1 und m) ihres Grauwertverlaufs zum Grauwertverlauf des aktuellen Originalbildes berechnet und die günstigere Version gewählt. Die Entscheidung wird anschließend zugunsten der objektbezogenen Bewegungskompensation mittels der Einrichtung G und der beiden Multiplizierglieder M1 und M2 gewichtet, da sie selbst bei annähernd gleicher Güte der blockweisen Bewegungskompensation den Vorteil des geringeren Steuerdatenaufwandes und der geringeren Artefaktbildung aufweist, wie oben bereits erläutert. Die Auswahl erfolgt in der Einheit AW, deren Ausgangssignal p den Prädikator PR (FIG. 1) steuert und ihm die zur Prädiktion nach Maßgabe der getroffenen Auswahl erforderlichen Daten, z.B. j oder k, zuführt.

**Patentansprüche**

1. Verfahren zur bewegungskompensierten Bild-zu-Bild-Prädiktionscodierung, bei dem zunächst ein gesamtes Bild in ein regelmäßiges Blockraster mit n x n Bildpunkten zerlegt wird und das die folgenden Schritte umfaßt:

  - für jeden der Blöcke wird in an sich bekannter Weise ein Verschiebungsvektor gegenüber den Blöcken des vorhergehenden Bildes durch Abstandsberechnung ermittelt,
  - aneinandergrenzende Blöcke, für die eine Verschiebung ungleich Null ermittelt wurde, werden in gleichfalls an sich bekannter Weise zu Komplexen zusammengefaßt, für welche aus den gemessenen Verschiebungen der Blöcke jeweils durch Regressionsrechnung die Parameter eines Bewegungsgesetzes berechnet werden,
  - zu jedem Block wird für mindestens die beiden Prädiktionsvorschriften
  I) nach dem ermittelten Verschiebungsvektor
  II) nach der sich aus dem berechneten Bewegungsgesetz ergebenden Blockverschiebung
  der jeweils resultierende Prädiktionsfehler bestimmt, und dann diejenige Prädiktionsvorschrift, die zu dem geringeren Prädiktionsfehler führt, zur Bildprädiktion ausgewählt.

2. Verfahren nach Anspruch 1, dadurch gekennzeichnet, daß zu jedem Block zusätzlich für die weiteren Pradiktionsvorschriften
  III) ohne Blockverschiebung
  IV) durch Nullsetzung der Prädiktion
  der jeweilige Prädiktionsfehler bestimmt und diejenige der vier Prädiktionsvorschriften (I bis IV), die zum geringsten Prädiktionsfehler führt, zur Bildprädiktion ausgewählt wird.

3. Verfahren nach Anspruch 1 oder 2, dadurch gekennzeichnet, daß vor der Auswahl eine Wichtung zugunsten der Berechnung des prädizierten Bildes gemäß dem für den gesamten Komplex ermittelten Bewegungsgesetz durchgeführt wird.

4. Verfahren nach Anspruch 1, dadurch gekennzeichnet, daß die Parameter des Bewegungsgesetzes lediglich aus ermittelten Verschiebungen von Ecken im Bildinhalt berechnet werden.

5. Verfahren nach einem der Ansprüche 1 bis 4, dadurch gekennzeichnet, daß unter Verwendung der ausgewählten und übertragenen Verschiebungsvektoren vom Decoder eine bewegungsrichtige Interpolation eventuell nicht codierter und nicht übertragener Teil- und Vollbilder durchgeführt wird.

**Claims**

1. Method for the interference prediction coding with compensation for movement, in which method an entire frame is resolved initially into a regular block raster with n.n image dots and which comprises the following steps:
  - for each of the blocks, a displacement vector relative to the blocks of the preceding frame is ascertained in an in itself known manner by spacing computation,
  - adjoining blocks, for which a displacement unequal to zero was ascertained, are in a likewise in itself known manner combined into complexes, for which the parameters of a law of motion are computed each time by regression computation from the measured displacements of the blocks,
  - for each block, the respectively resultant prediction error is ascertained for at least both the prediction rules
  I) according to the ascertained displacement vector and
  II) according to the block displacement resulting from the computed law of motion
  and that prediction rule is then selected for frame prediction, which leads to the lower prediction error.

2. Method according to claim 1, characterised thereby, that the respective prediction error is ascertained additionally for the further prediction rules
  III) without block displacement and
  IV) by zero-setting of the prediction
  and that one of the four prediction rules (I to IV) is selected for frame prediction, which leads to the lower prediction error.

3. Method according to claim 1, characterised thereby, that a weighting in favour of the computation of the predicted frame according to the law of motion ascertained for the entire complex is performed before the selection.

4. Method according to claim 1, characterised thereby, that the parameters of the law of motion are computed merely from displacements of corners in the frame content.

5. Method according to one of the claims 1 to 4, characterised thereby, that a motionally correct interpolation of possibly not coded and not transmitted partial and full frames is performed by the decoder with the use of the selected and transmitted displacement vectors.

**Revendications**

1. Procédé pour le codage de prédiction, d'image à image, avec compensation du mouvement, dans le cas duquel on décompose tout d'abord une image totale en une trame régulière de blocs comportant n x n points d'image et qui comprend les pas suivants:
   - pour chacun des blocs on établit, par un calcul d'écart, de façon connue en soi, un vecteur de déplacement par rapport aux blocs de l'image précédente,
   - des blocs qui se jouxtent l'un l'autre, pour lesquels a été déterminé un déplacement non nul, sont regroupés, de façon également connue en soi, pour donner des complexes pour lequels, à partir des déplacements mesurés des blocs, on calcule respectivement, par un calcul de régression, les paramètres d'une loi du mouvement,
   - pour chaque bloc, on détermine, pour au moins les deux procédures de prédiction
   I) d'après le vecteur de déplacement déterminé
   II) d'après le déplacement du bloc qui résulte de la loi de mouvement calculée
   l'erreur de prédiction qui en résulte à chaque fois, puis on choisit pour la prédiction de l'image la procédure de prédiction qui conduit à la plus faible erreur de prédiction.

2. Procédé selon la revendication 1, caractérisé par le fait que pour chaque bloc, on détermine en outre pour les autres procédures de prédiction
   III) sans déplacement du bloc
   IV) en donnant à la prédiction une valeur nulle
   l'erreur respective de prédiction et par le fait que l'on choisit pour la prédiction de l'image celle des quatre procédures de prédiction (I à IV) qui conduit à la plus faible erreur de prédiction.

3. Procédé selon la revendication 1 ou 2, caractérisé par le fait qu'avant le choix on procède à une pondération en faveur du calcul de l'image prédite selon la loi de mouvement déterminée pour l'ensemble du complexe.

4. Procédé selon la revendication 1, caractérisé par le fait que les paramètres de la loi du mouvement ne sont calculés qu'à partir des déplacements, déterminés, des angles du contenu de l'image.

5. Procédé selon l'une des revendications 1 à 4, caractérisé par le fait qu'en employant des vecteurs de déplacment choisis et transmis, le décodeur procède à une interpolation, correcte au point de vue mouvement, d'images partielles et d'images entières, éventuellement non codées et non transmises.

FIG. 1

FIG. 2

FIG. 3

8